# EUROPEAN PATENT SPECIFICATION

(11) **EP 1 487 182 B1**
(45) Date of publication and mention of the grant of the patent: **14.02.2007**
(21) Application number: 03013300.3
(22) Date of filing: 13.06.2003
(51) Int. Cl.: H04M 1/00

(54) **Method and system for handsfree phone functionality**
Verfahren und System für eine Freisprechanlage
Méthode et système d'une functionalité de communication mains libres

(43) Date of publication of application: 15.12.2004
(73) Proprietor: Ford Global Technologies, LLC, Dearborn, MI 48126 (US)
(72) Inventor: Fast, Peder, 429 34 Kullavik (SE)
(74) Representative: Hammond, Andrew David

(56) References cited:
- EP-A- 1 326 410
- US-A1- 2002 197 954
- US-A1- 2003 032 460

## Description

### Technical field

The present patent application relates to a system for handsfree phone functionality in an automotive vehicle in accordance with the preamble of claim 1.

The present invention further relates to a method for handsfree phone functionality in an automotive vehicle in accordance with the preamble of claim 9.

### Background of the invention

Integrated telephones are common in many models and makes of cars currently on the market. Such integrated phones also facilitate telematic applications, such as crash notifications, emergency calls, remote vehicle functions and diagnostics as well as navigation systems.

Integrated telephone systems for cars often comprise a speaker, a microphone, keys or a keypad and often a display unit. Sometimes these systems also comprise a voice recognition system. The system usually also includes echo cancellation and noise reduction capabilities. It is normal practice to develop such integrated telephone systems for cars individually or to modify them in order to fit into every different car model.

Development of this kind of integrated telephone systems for cars is expensive and there are different wiring standards and different form factors to consider. There is also usually a need to develop different systems to account for different mobile phone network standards. Today, most integrated telephone systems for cars are factory fit, making it hard to fulfill customer demands as new features and functionalities are introduced to the mobile phone networks. The resultant technology lag also reduces the value of such integrated telephone systems for cars on the used car market.

Occupants of cars, such as drivers and passengers, also bring their cellular phone handsets into the vehicles. The integrated phone and/or telematic systems of the vehicle and these handsets operate independent of each other.

In some cars such handsets can be docked to a handsfree docking station, and there are also handsfree docking stations available as accessories. However, use thereof is usually restricted to a particular brand or model phone, which usually prevents use of thereof by other vehicle occupants than the vehicle owner.

One such system and method is previously known through US 2002 197954, in which is described a system and method for adapting a wireless device, such as a Bluetooth-enabled mobile handset or other Bluetooth-enabled device to a car radio and associated speaker system to effect a hands-free car kit or similar system. The adapter module is physically and electrically coupled to the car radio by making electrical contact with a connector on the car radio with a matching connector on one side of the adapter module. The mated connectors provide communications from the adapter module to the car radio. The adapter module includes circuitry for communicating with the Bluetooth-enabled mobile handset and the car radio in order to exchange communications signals between the Bluetooth-enabled mobile handset, and a microphone and the car radio.
A system according to the preamble of claim 1 is previously known through US 2003 0032460 A1, in which is described a wireless multi-user hands-free gateway particularly suited for a vehicle. The wireless hands-free gateway is capable of wireless operation with any of a plurality of wireless phones established on a piconet network within the vehicle. In the disclosed embodiments, the wireless mufti-user hands-free gateway automatically identifies users within range, and preferably gives priority use to the user detected or otherwise identified to be the driver of the vehicle. The system allows all passengers and the driver of the vehicle to share a single hands-free unit using a respective wireless phone.

A disadvantage with the arrangements snown from the prior art mentioned above is that they are not adapted to provide for e.g. handsfree functionality in a vehicle in a scenario where e.g. the driver of the vehicle having an integrated car phone also has brought into the vehicle a handheld cellular phone allowing the handsfree functionality to be used for both phones at the same time.

### Summary of the invention

One object of the invention is to provide an improved device for handsfree phone functionality in a vehicle and in particular an improved device for handsfree phone functionality in a vehicle having an integrated car phone addressing the problems described in relation to the prior art arrangement.

This object is achieved in accordance with the features of claim 1.

Thanks to the provision of means for enabling said system to be simultaneously paired with said car integrated telephone system through a second communications link, said second communications link being separate from a first communications link used for pairing said system with a first mobile phone handset, the same system for handsfree phone functionality can be used simultaneously by an integrated car phone and one or more portable mobile phone handsets.

One further object of the invention is to provide an improved method for providing handsfree phone functionality in a vehicle and in particular an improved method for providing handsfree phone functionality in a vehicle having an integrated car phone addressing the problems described in relation to the prior art arrangement.

This object is achieved in accordance with the features of claim 8.

Thanks to the provision of a step for enabling said system to be simultaneously paired with said car integrated telephone system through a second communications link, said second communications link being separate from a first communications link used for pairing said system with a first mobile phone handset, simultaneous use of the same system for handsfree phone functionality by an integrated car phone and one or more portable mobile phone handsets is facilitated.

Preferred embodiments are listed in the dependent claims.

### Description of drawings

In the following, the invention will be described in greater detail with reference to attached drawings, in which:

Fig. 1 is a simplified partial side view of a vehicle comprising a system for handsfree phone functionality according to a first embodiment of the present invention.

Fig. 2 is a simplified partial side view of a vehicle comprising a system for handsfree phone functionality according to a second embodiment of the present invention.

Fig. 3 is a simplified block schematic of the system for handsfree phone functionality in an automotive vehicle in accordance with the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

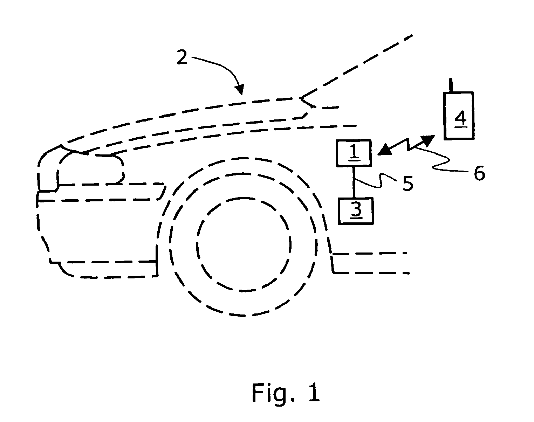

A simplified partial side view of a vehicle comprising a system 1 for handsfree phone functionality in an automotive vehicle 2 according to a first embodiment of the present invention is shown in figure 1.

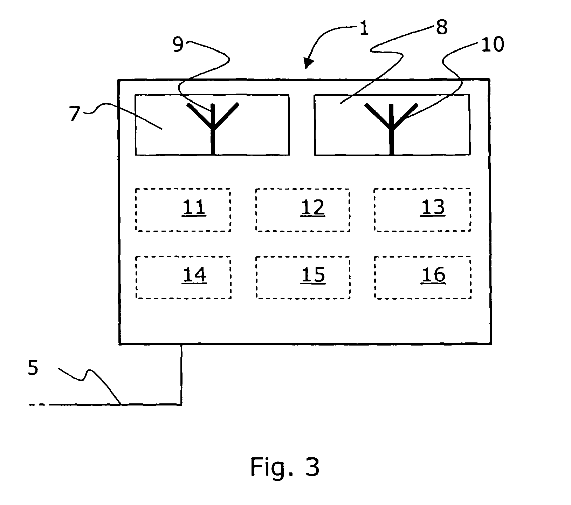

As illustrated by the simplified block schematic of figure 3 the system 1 for handsfree phone functionality in an automotive vehicle 2 comprises , a microphone 11 and/or a speaker 12. The system 1 can also comprise means for user input 13, such as keys or a keypad, and presentation means 14, such as a display. It is also possible to integrate a voice recognition system 15. Further, the system 1 can also comprise sound processing means 16, such as echo cancellation and noise reduction.

The system 1 further comprises means 7 for pairing said microphone 11 and/or speaker 12 system 1 with a first mobile phone handset 4 through a first communications link. According to the invention the first communications link is preferably a first wireless communications link 6. This first wireless communications link 6 is preferably arranged to work under the Bluetooth specification, or similar protocols or standards, encompassing other short range wireless networks such as IEEE802.11, IrDA and similar. In the case of the first communications link 6 being a first wireless communications link the means 7 for pairing said system 1 with a first mobile phone handset 4 preferably comprises antenna means 9, either integral to the system 1 or external via a wired connection.

Further, the system 1 comprises means 8 for enabling s said system 1 to be simultaneously paired with an additional mobile phone 3, such as a car integrated telephone system fixedly attached in said vehicle, through a second communications link 5, said second communications link 5 being separate from said first communications link 6. In the embodiment illustrated in figure 1 it is envisaged that said second communications link 5 is a wired communications link, such as e.g. a Controller Area Network (CAN) serial bus and additional wiring for the audio signals.

The Controller Area Network (CAN) is a serial communications protocol which efficiently supports distributed real-time control with a very high level of security. Its domain of application ranges from high speed networks to low cost multiplex wiring. In automotive electronics, engine control units, sensors, anti-skid-systems, etc. are connected using CAN with bit rates up to 1 Mbit/s. At the same time it is cost effective to build into vehicle body electronics, e.g. lamp clusters, electric windows etc. to replace the wiring harness otherwise required. The CAN-bus is used to provide uniform wiring in an increasing number of automotive vehicles.

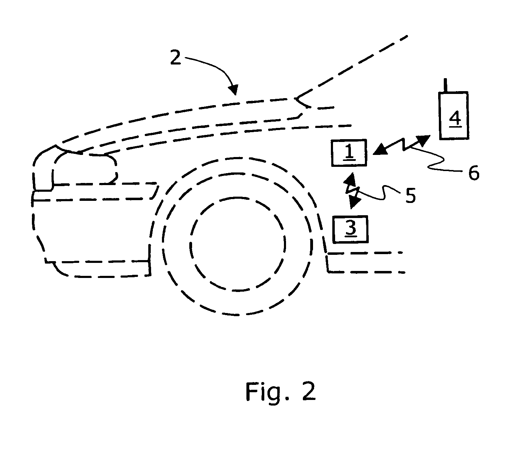

Fig. 2 shows a simplified partial side view of a vehicle comprising a system for handsfree phone functionality in an automotive vehicle according to a second embodiment of the present invention. In the embodiment according to figure 2 it is envisaged that the second communications link 5 is a second wireless communications link. Also this second wireless communications link is preferably arranged to work under the Bluetooth specification, or similar protocols or standards, encompassing other short range wireless networks such as IEEE802.11, IrDA and similar. Preferably a common Bluetooth node is utilized for said first and second wireless communication links 5, 6. In the case of the second communications link 5 being a second wireless communications link the means 7 for pairing said system 1 with a first mobile phone handset 4 preferably comprises antenna means 10, either integral to the system 1 or external via a wired connection.

It is envisaged (not shown) that both of said first and second communication links can be wired communications links, such as e.g. a Controller Area Network (CAN) serial bus and additional wiring for the audio signals.

The use of standardized second communications link, such as Bluetooth or a Controller Area Network (CAN) serial bus and additional wiring for the audio signals enables development of integrated telephone systems for cars as vehicle independent modules, which can be used in a large number of cars of different models and brands, why the cost of such systems can be greatly reduces while at the same time, upgrades of integrated telephone systems for cars as new technology reaches the marketplace is facilitated. Further, modules adapted for different mobile phone network standards are easily interchangeable. Thus, integration of a system in accordance with the present invention increases the value of the vehicle on the used car market.

The system in accordance with the present invention enables simultaneous use of the same handsfree system and its associated functionalities from an integrated car phone 3 as well as any number of mobile phone handsets 4 brought into the vehicle 2 by occupants thereof, such as the driver and the passengers through the provision of separate communication links 6, 5. The number of links provided being the only limitation to the number of phones which can be used with the system, e.g. through utilizing a common Bluetooth node and the same profile and protocol, e.g. the Bluetooth handsfree protocol, simultaneous use of up to eight devices is allowed. The system allows the occupants of the vehicle to answer any incoming call on any paired handset or the integrated car phone, and in the same way, the system enables initiation of an outgoing call on any paired device. Further, the system can provide for user selection of which paired device to use at a specific time or, in case of a conflict, provide for a prioritization of the paired devices.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A system (1) for handsfree phone functionality for an automotive vehicle (2), the vehicle having a car integrated telephone system fixedly attached in said vehicle (2), said system comprising:
a microphone (11), and/or
a speaker (12), and
means (7) for pairing said microphone (11) and/or said speaker (12) system (1) with a first mobile phone handset (4) through a first communications link (6),
**characterized in that** said system (1) further comprise:
means (8) for enabling said system (1) to be simultaneously paired with said car integrated telephone system through a second communications link (5), said second communications link (5) being separate from said first communications link (6), where said first communications link (6) is a first wireless communications link arranged to work under a short range wireless network protocol or standard, and said second communications link (5) is a wired communications link which is a Controller Area Network serial bus.

2. A system (1) according to claim 1,
**characterized in that** said first wireless communications link is arranged to work under the Bluetooth specification.

3. A system (1) according to claim 1,
**characterized in that** said first wireless communications link is arranged to work under the IEEE802.11 specification.

4. A system (1) according to claim 1,
**characterized in that** said first wireless communications link is arranged to work under the IrDA specification.

5. A system (1) according to any one of claims 1 to 4,
**characterized in that** it further comprises means for user input (13), such as keys or a keypad, and presentation means (14), such as a display.

6. A system (1) according to any one of claims 1 to 5,
**characterized in that** it further comprises a voice recognition system (15).

7. A system (1) according to any one of claims 1 to 6,
**characterized in that** it further comprises sound processing means (16), such as echo cancellation and noise reduction.

8. A method for handsfree phone functionality in an automotive vehicle (2) having a car integrated telephone system fixedly attached in said vehicle (2), **characterized in that** it comprises the steps of:
providing a system (1) comprising a microphone (11) and/or a speaker (12),
pairing said microphone (11) and/or said speaker (12) system (1) with a first mobile phone handset (4) through a first communications link (6),
enabling said system (1) to be simultaneously paired with said car integrated telephone system through a second communications link (5), said second communications link (5) being separate from said first communications link (6),
providing as said first communications link (6) a first wireless communications link, arranging said first wireless communications link to work under a short range wireless network protocol or standard,
providing as said second communications link (5) a wired communications link, which is a controller Area Network serial bus.

9. A method according to claim 8,
**characterized in that** it further comprises the step of:
arranging said first wireless communications link to work under the Bluetooth specification.

10. A method according to claim 8,
**characterized in that** it further comprises the step of:
arranging said first wireless communications link to work under the IEEE802.11 *s*pecification.

11. A method according to claim 8,
**characterized in that** it further comprises the step of:
arranging said first wireless communications link to work under the IrDA specification.

12. A method according to any one of claims 8 to 11,
**characterized in that** it further comprises the steps of:
providing said system (1) with means for user input (13), such as keys or a keypad, and presentation means (14), such as a display.

13. A method according to any one of claims 8 to 12,
**characterized in that** it further comprises the step of:
providing said system (1) with a voice recognition system (15).

14. A method according to any one of Claims 8 to 13,
**characterized in that** it further comprises the step of:
providing said system (1) with sound processing means (16), such as echo cancellation and noise reduction.

15. An automotive vehicle,
**characterized in that** it comprises a system (1) according to any one of claims 1 to 7.

## Patentansprüche

1. System (1) für eine Freisprechfunktionalität für einem Kraftfahrzeug (2), wobei das Fahrzeug ein in das Fahrzeug integriertes Telephonsystem besitzt, das in dem Fahrzeug (2) fest angebracht ist, wobei das System umfasst:
ein Mikrophon (11) und/oder einen Lautsprecher (12) und
Mittel (7) zum Zusammenführen des Systems (1) aus Mikrophon (11) und/oder Lautsprecher (12) mit einem ersten Mobiltelephon-Handapparat (4) über eine erste Kommunikationsverbindung (6),
**dadurch gekennzeichnet, dass** das System (1) ferner umfasst:
Mittel (8), die ermöglichen, dass das System (1) gleichzeitig über eine zweite Kommunikationsverbindung (5) mit dem in das Fahrzeug integrierten Telephonsystem zusammengeführt wird, wobei die zweite Kommunikationsverbindung (5) von der ersten Kommunikationsverbindung (6) getrennt ist, wobei die erste Kommunikationsverbindung (6) eine drahtlose Kommunikationsverbindung ist, die so beschaffen ist, dass sie unter einem nahbereichs Drahtlosnetz-Protokoll oder -Standard arbeitet, und die zweite Kommunikationsverbindung (5) eine drahtgebundene Kommunikationsverbindung ist, die ein serieller Bus eines Controllerbereichnetzes (Controller Area Network) ist.

2. System (1) nach Anspruch 1,
**dadurch gekennzeichnet, dass** die erste drahtlose Kommunikationsverbindung so beschaffen ist, dass sie unter der Bluetooth-Spezifikation arbeitet.

3. System (1) nach Anspruch 1,
**dadurch gekennzeichnet, dass** die erste drahtlose Kommunikationsverbindung so beschaffen ist, dass sie unter der IEEE802.11-Spezifikation arbeitet.

4. System (1) nach Anspruch 1,
**dadurch gekennzeichnet, dass** die erste drahtlose Kommunikationsverbindung so beschaffen ist, dass sie unter der IrDA-Spezifikation arbeitet.

5. System (1) nach einem der Ansprüche 1 bis 4,
**dadurch gekennzeichnet, dass** es ferner Mittel für eine Anwendereingabe (13) wie etwa Tasten oder ein Tastenfeld sowie Darstellungsmittel (14) wie etwa eine Anzeige umfasst.

6. System (1) nach einem der Ansprüche 1 bis 5, **dadurch gekennzeichnet, dass** es ferner ein Spracherkennungssystem (15) umfasst.

7. System (1) nach einem der Ansprüche 1 bis 6,
**dadurch gekennzeichnet, dass** es ferner Schallverarbeitungsmittel (16) wie etwa eine Echokompensation und eine Geräuschreduzierung umfasst.

8. Verfahren für eine Freisprechfunktionalität in einem Kraftfahrzeug (2), das ein in ein Fahrzeug integriertes Telephonsystem besitzt, das in dem Fahrzeug (2) fest angebracht ist, **dadurch gekennzeichnet, dass** es die folgenden Schritte umfasst:
Bereitstellen eines Systems (1), das ein Mikrophon (11) und/oder einen Lautsprecher (12) umfasst,
Zusammenführen des Systems (1) aus Mikrophon (11) und/oder Lautsprecher (12) mit einem ersten Mobiltelephon-Handapparat (4) über eine erste Kommunikationsverbindung (6),
Ermöglichen, dass das System (1) gleichzeitig über eine zweite Kommunikationsverbindung (5) mit dem in das Fahrzeug integrierten Telephonsystem zusammengeführt wird, wobei die zweite Kommunikationsverbindung (5) von der ersten Kommunikationsverbindung (6) getrennt ist,
Bereitstellen einer ersten drahtlosen Kommunikationsverbindung als die erste Kommunikationsverbindung (6),
Ausbilden der ersten drahtlosen Kommunikationsverbindung in der Weise, dass es unter einem nahbereichs Drahtlosnetz-Protokoll oder
-Standard arbeitet, und
Bereitstellen einer drahtgebundenen Kommunikationsverbindung als die zweite Kommunikationsverbindung (5), die ein serieller Bus eines Controllerbereichsnetzes (Controller Area Network) ist.

9. Verfahren nach Anspruch 8,
**dadurch gekennzeichnet, dass** es ferner den folgenden Schritt umfasst:
Ausbilden der ersten drahtlosen Kommunikationsverbindung, damit sie unter der Bluetooth-Spezifikation arbeitet.

10. Verfahren nach Anspruch 8,
**dadurch gekennzeichnet, dass** sie ferner den folgenden Schritt umfasst:
Ausbilden der ersten drahtlosen Kommunikationsverbindung, damit sie unter der IEEE802.11-Spezifikation arbeitet.

11. Verfahren nach Anspruch 8,
**dadurch gekennzeichnet, dass** es ferner den folgenden Schritt umfasst:
Ausbilden der ersten drahtlosen Kommunikationsverbindung, damit sie unter der IrDA-Spezifikation arbeitet.

12. Verfahren nach einem der Ansprüche 8 bis 11,
**dadurch gekennzeichnet, dass** es ferner die folgenden Schritte umfasst:
Versehen des Systems (1) mit Mitteln für eine Anwendereingabe (13) wie etwa Tasten oder ein Tastenfeld und mit Darstellungsmitteln (14) wie etwa einer Anzeige.

13. Verfahren nach einem der Ansprüche 8 bis 12,
**dadurch gekennzeichnet, dass** es ferner den folgenden Schritt umfasst:
Versehen des Systems (1) mit einem Spracherkennungssystem (15).

14. Verfahren nach einem der Ansprüche 8 bis 13,
**dadurch gekennzeichnet, dass** es ferner den folgenden Schritt umfasst:
Versehen des Systems (1) mit Schallverarbeitungsmitteln (16) wie etwa einer Echokompensation und einer Geräuschreduzierung.

15. Kraftfahrzeug,
**dadurch gekennzeichnet, dass** es ein System (1) nach einem der Ansprüche 1 bis 7 umfasst.

## Revendications

1. Système (1) avec une fonction téléphone mains libres pour un véhicule automobile (2) ledit véhicule étant équipé d'un système de téléphonie intégrée monté sur le véhicule, ledit système comprenant :
- un microphone (11) et/ou
- un haut-parleur (12), et
- les dispositifs pour coupler ledit système (1) avec microphone (11) et/ou haut parleur avec un premier téléphone mobile (4) à l'aide d'une première liaison de communication (6),
**caractérisé par le fait que** ledit système (1) comprend également :
les moyens (8) pour permettre au dit système (1) d'être simultanément relié avec ledit système embarqué de téléphonie intégrée au moyen d'une seconde liaison de communication (5), ladite seconde liaison de communication (5) étant distincte de ladite première liaison de communication (6), et où ladite première liaison de communication (6) est une liaison sans fil prévue pour fonctionner selon un protocole ou une norme de réseau radio sans fil à courte portée, et où ladite seconde liaison de communication (5) est une liaison câblée, sous la forme d'un bus série CAN.

2. Système (1) selon la revendication 1,
**caractérisé par le fait que** ladite première liaison de communication sans fil est prévue pour fonctionner selon la spécification Bluetooth.

3. Système (1) selon la revendication 1,
**caractérisé par le fait que** ladite première liaison de communication sans fil est prévue pour fonctionner selon la spécification 1EEE802.11 (WI-FI)

4. Système (1) selon la revendication 1 ,
**caractérisé par le fait que** ladite première liaison de communication sans fil est prévue pour fonctionner selon la spécification IrDA (Infra-red Data Association)

5. Système (1) selon une des revendications 1 à 4,
**caractérisé par le fait qu'**il comporte également les dispositifs permettant l'entrée de données par l'utilisateur (13), tels que des touches ou un pavé numérique, et un dispositif de présentation (14) tel qu'un affichage.

6. Système (1) selon une des revendications 1 à 5,
**caractérisé par le fait qu'**il comprend également un système de reconnaissance vocale (15)

7. Système selon une des revendications 1 à 6,
**caractérisé par le fait qu'**il comporte encore des fonctionnalités de traitement du son (16), telles que l'élimination de l'écho acoustique et la réduction du bruit.

8. Méthode pour une fonction de téléphone mains libres dans un véhicule automobile (2) comportant un système embarqué de téléphonie intégrée dans ledit véhicule (2), **caractérisée par le fait qu'**elle inclut les démarches suivantes :
- offrir un système (1) comportant un microphone (11) et/ou un haut-parleur (12),
- coupler ledit microphone (11) et/ou ledit haut-parleur (12) du système (1) avec un premier téléphone mobile (4) à l'aide d'une première liaison de communication (6),
- permettre au dit système (1) d'être simultanément couplé au dit système embarqué de téléphonie intégrée au moyen d'une seconde liaison de communication (5), ladite seconde liaison (5) étant distincte de la première liaison de communication (6),
- fournir, en tant que dite première liaison de communication (6) une première liaison sans fil, ladite première liaison de communication sans fil fonctionnant sous un protocole ou une norme de réseau sans fil à courte portée.
- fournir, en tant que dite seconde liaison de communication (5) une liaison câblée sous la forme d'un bus série CAN.

9. Méthode selon la revendication 8,
**caractérisée par le fait qu'**elle comprend également la démarche de :
prévoir le fonctionnement de ladite première liaison de communication sans fil selon la spécification Bluetooth.

10. Méthode selon la revendication 8,
**caractérisée par le fait qu'**elle comprend également la démarche de :
prévoir le fonctionnement de ladite première liaison de communication sans fil selon la spécification IEE802.11 (WI-FI)

11. Méthode selon la revendication 8,
**caractérisée par le fait qu'**elle comprend également la démarche de :
prévoir le fonctionnement de ladite première liaison de communication sans fil selon la spécification IrDA (Infra-red Data Association).

12. Méthode selon une des revendications 8 à 11
**caractérisée par le fait qu'**elle comprend également la démarche de :
équiper ledit système (1) de dispositifs permettant l'entrée de données par l'utilisateur (13), tels que des touches ou un pavé numérique, et un dispositif de présentation (14) tel qu'un affichage.

13. Méthode selon une des revendications 8 à 12,
**caractérisée par le fait qu'**elle comprend également la démarche de :
équiper ledit système (1) d'un système de reconnaissance vocale (15).

14. Méthode selon une des revendications 8 à 13,
**caractérisée par le fait qu'**elle comprend également la démarche de :
munir ledit système (1) de fonctions de traitement du son (16) telles que l'élimination de l'écho acoustique et la réduction du bruit.

15. Véhicule automobile,
**caractérisé par le fait qu'**il est équipé d'un système (1) conçu selon une des revendications 1 à 7.
